# FASCICULE DE BREVET EUROPEEN

(11) **EP 2 516 271 B1**
(45) Date de publication et mention de la délivrance du brevet: **16.08.2017**
(21) Numéro de dépôt: 10812983.4
(22) Date de dépôt: 21.12.2010
(51) Int. Cl.: B64D 33/02

(54) **NACELLE INCORPORANT UN ELEMENT DE JONCTION ENTRE UNE LEVRE ET UN PANNEAU D'ATTENUATION ACOUSTIQUE**
TRIEBWERKSGONDEL MIT EINEM ELEMENT ZUR VERBINDUNG EINER UMKANTUNG MIT EINER SCHALLDÄMMUNGSPLATTE
NACELLE INCORPORATING AN ELEMENT FOR CONNECTING A LIP AND AN ACOUSTIC ATTENUATION PANEL TOGETHER

(30) Priorité: 22.12.2009 FR 0959399
(43) Date de publication de la demande: 31.10.2012
(73) Titulaire: Airbus Opérations SAS, 31060 Toulouse (FR)
(72) Inventeur: PORTE, Alain, F-31770 Colomiers (FR); LALANE, Jacques, F-31650 Saint Orens De Gameville (FR)
(74) Mandataire: Fantin, Laurent
(86) Numéro de dépôt international: PCT/FR2010/052837
(87) Numéro de publication internationale: WO 2011/086281

(56) Documents cités:
- EP-A1- 1 013 910
- EP-A2- 1 357 279
- GB-A- 1 427 339
- GB-A- 2 314 887
- US-A1- 2003 163 985

## Description

La présente invention se rapporte à une nacelle d'aéronef incorporant un élément de jonction entre une lèvre et un panneau d'atténuation acoustique.

Un ensemble propulsif d'aéronef comprend une nacelle dans laquelle est disposée de manière sensiblement concentrique une motorisation reliée par l'intermédiaire d'un mât par exemple au reste de l'aéronef.

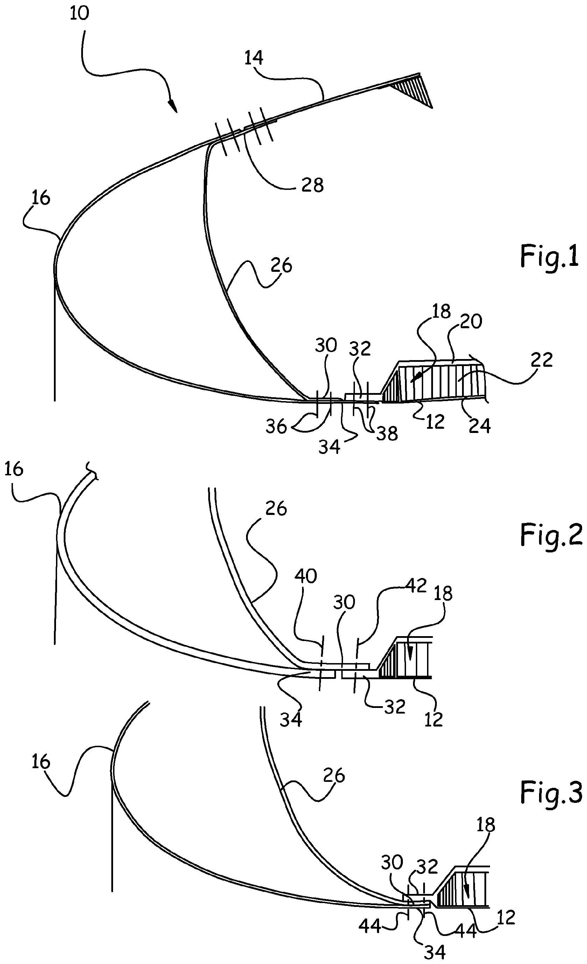

Comme illustré sur la figure 1, la nacelle 10 comprend un conduit 12, une paroi périphérique 14, et à l'avant, une entrée d'air délimitée par une lèvre 16 qui relie le conduit 12 et la paroi périphérique 14.

Le conduit 12 est relié à l'arrière à la motorisation.

De manière connue, le conduit 12 comporte un revêtement ou panneau 18 pour le traitement acoustique comprenant de l'intérieur vers l'extérieur, une couche réflectrice 20, au moins une structure alvéolaire 22 et au moins une structure acoustiquement résistive 24 formant la surface aérodynamique du conduit 12. Avantageusement, la lèvre 16 peut comprendre également un revêtement pour le traitement acoustique.

Pour renforcer la structure de la nacelle, un cadre avant 26 est solidarisé à la lèvre 16 et s'étend entre le conduit 12 et la paroi périphérique 14.

Selon un mode de réalisation, pour assurer la liaison entre le panneau formant la lèvre 16 et le panneau formant la paroi périphérique 14, les bords desdits panneaux sont plaqués puis fixés par tous moyens appropriés contre un rebord 28 du cadre avant 26.

Au niveau de la zone de jonction de la lèvre 16 et du conduit 12, l'extrémité du cadre avant 26 orientée vers le centre de la nacelle comprend un rebord 30 orienté vers l'arrière et le conduit 12 comprend un rebord 32 sensiblement cylindrique. La lèvre 16 se prolonge vers l'arrière par un prolongement 34.

Selon un mode de réalisation illustré sur la figure 1, le rebord 30 du cadre avant est plaqué et fixé par des moyens de fixation 36 contre la face intérieure du prolongement 34 de la lèvre 16 et le rebord 32 du conduit 12 est également plaqué et fixé par des moyens de fixation 38 contre la face intérieure du prolongement 34 de la lèvre, le rebord 30 et le rebord 32 étant disposés bord à bord.

Selon un autre mode de réalisation illustré sur la figure 2, le prolongement 34 de la lèvre 16 est plaqué et fixé par des moyens de fixation 40 contre la face extérieure du rebord 30 du cadre avant et le rebord 32 du conduit 12 est également plaqué et fixé par des moyens 42 de fixation contre la face extérieure du rebord 30 du cadre avant, le rebord 32 et le prolongement 34 étant disposés bord à bord.

Selon un autre mode de réalisation illustré sur la figure 3 et dans le document FR-2.887.519, pour réduire la longueur de la zone de jonction selon la direction longitudinale, le rebord 30 du cadre avant est plaqué contre la face intérieure du prolongement 34 de la lèvre 16, et le rebord 32 du conduit 12 est plaqué contre la face intérieure du rebord 30 du cadre avant, l'ensemble étant solidarisé par des moyens de fixation 44.

Dans tous les modes de réalisation précédemment mentionnés, la lèvre, le cadre et le conduit sont reliés directement.

Généralement, le conduit 12 est constitué de plusieurs panneaux assemblés entre eux, formant un premier sous ensemble sensiblement rigide de forme sensiblement cylindrique.

En parallèle, la lèvre 16 et le cadre avant 26 sont assemblés de manière à former un second sous ensemble sensiblement rigide dont un bord périphérique sensiblement cylindrique orienté vers l'arrière doit être assemblé au conduit 12. En suivant, ces deux sous ensembles doivent être assemblés.

Pour parvenir à cet assemblage, les deux sous ensembles doivent avoir au niveau de leurs zones de jonction des dimensions avec des intervalles de tolérance réduits afin de pouvoir être assemblés compte tenu de leurs certaines rigidités. Or, ces intervalles de tolérance réduits conduisent à augmenter les coûts et/ou la durée de fabrication de ces deux sous ensembles.

En variante, il est possible d'augmenter les intervalles de tolérance de chacun des sous ensembles et de compenser les dispersions dimensionnelles par des cales intercalées entre les deux sous ensembles. Toutefois, cette solution tend à augmenter la durée et/ou les coûts de l'assemblage.

Le document GB-1.427.339 décrit une entrée d'air avec une lèvre comportant à l'extérieur des panneaux formant des zones de ruptures privilégiées et un conduit avec en partie arrière une zone de rupture privilégiée. La lèvre et le conduit sont reliés par un cadre avant, ce dernier étant susceptible de se déformer en forme de cône en cas de choc. Ce cadre avant ne permet pas un mouvement relatif entre le conduit intérieur et la portion de la lèvre disposée dans le prolongement du conduit intérieur puisque ces trois éléments sont reliés entre eux en un même point.

Le document GB-2.314.887 décrit une entrée d'air qui comprend une lèvre et un conduit intérieur reliés par élément de jonction en forme de 5. Cet élément de jonction comprend une première partie reliée à l'entrée d'air et une seconde partie reliée au conduit intérieur. L'entrée d'air comprend également un cadre avant relié d'une part à la première partie de l'élément de jonction et d'autre part à la seconde partie de l'élément de jonction. Comme précédemment, le cadre avant ne permet par un mouvement relatif entre la lèvre et le conduit intérieur. Aussi, la présente invention vise à pallier les inconvénients de l'art antérieur en proposant une nacelle incorporant un élément de jonction, appelé également pont, intercalé entre une lèvre et un conduit constitué d'au moins un panneau acoustique.

A cet effet, l'invention a pour objet une nacelle d'aéronef comprenant d'une part un premier sous ensemble constitué d'un conduit canalisant un flux d'air en direction d'une motorisation avec un revêtement ou panneau pour le traitement acoustique comprenant de l'intérieur vers l'extérieur, une couche réflectrice, au moins une structure alvéolaire et au moins une structure acoustiquement résistive formant la surface aérodynamique du conduit, et d'autre part un deuxième sous ensemble constitué d'une lèvre et d'un cadre avant avec un rebord orienté vers l'arrière de la nacelle, au moins un élément de jonction indépendant des deux sous-ensembles reliant les deux sous-ensembles, caractérisée en ce que l'élément de jonction comprend d'une part une première partie cylindrique dont le diamètre est adapté pour que ladite première partie soit plaquée et fixée par des moyens de liaison à la face intérieure du rebord du cadre avant orienté vers l'arrière de la nacelle, et d'autre part, une seconde partie cylindrique reliée à l'extrémité du conduit, lesdites deux parties cylindriques étant reliées par une portion conique ou cylindrique et en ce que l'élément de jonction est réalisé en un matériau ayant un coefficient d'allongement supérieur à 5% de manière à absorber grâce à sa capacité à se déformer une partie de l'énergie d'un choc D'autres caractéristiques et avantages ressortiront de la description qui va suivre de l'invention, description donnée à titre d'exemple uniquement, en regard des dessins annexés sur lesquels :
- la figure 1 est une coupe de l'avant d'une nacelle d'aéronef selon un premier mode de réalisation de l'art antérieur,
- la figure 2 est une coupe de l'avant d'une nacelle d'aéronef selon un autre mode de réalisation de l'art antérieur,
- la figure 3 est une coupe de l'avant d'une nacelle d'aéronef selon un autre mode de réalisation de l'art antérieur,
- la figure 4 est une coupe de l'avant d'une nacelle d'aéronef illustrant un mode d'assemblage d'une lèvre et d'un conduit selon l'invention,
- la figure 5 est une coupe illustrant en détails la zone de jonction entre la lèvre et le conduit de la figure 4,
- la figure 6 est une coupe illustrant en détails un autre mode de réalisation selon l'invention de l'assemblage d'une lèvre et d'un conduit d'une nacelle d'aéronef,
- la figure 7 est une coupe illustrant en détails un autre mode de réalisation selon l'invention de l'assemblage d'une lèvre et d'un conduit d'une nacelle d'aéronef, et
- la figure 8 est une coupe illustrant en détails un autre mode de réalisation selon l'invention de l'assemblage d'une lèvre et d'un conduit d'une nacelle d'aéronef.

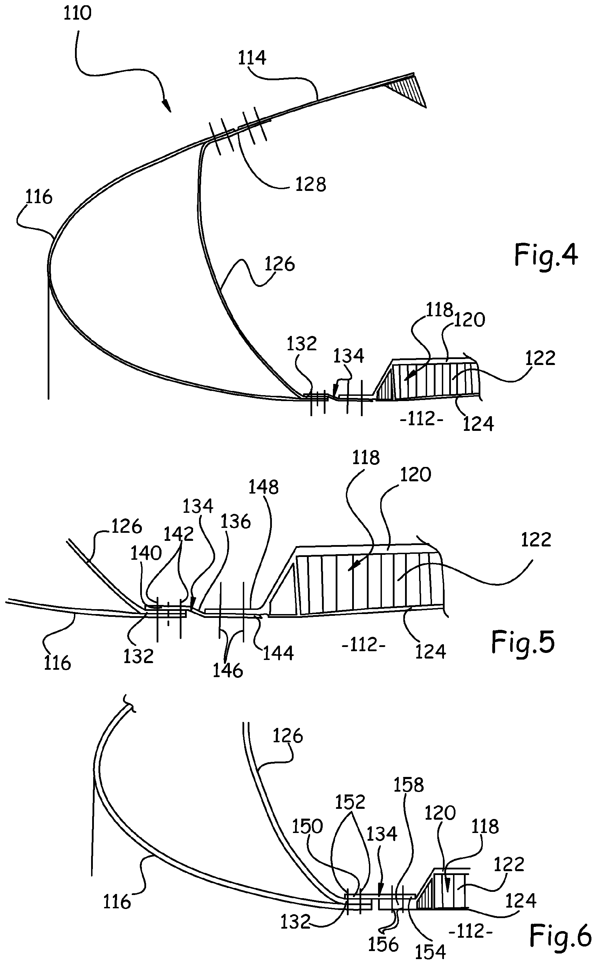

Sur la figure 4, on a représenté une partie de l'avant d'une nacelle 110 d'aéronef comportant un conduit 112 canalisant un flux d'air en direction d'une motorisation non représentée, une paroi périphérique 114, et à l'avant, une entrée d'air délimitée par une lèvre 116 qui relie le conduit 112 et la paroi périphérique 114. Le conduit 112 comporte un revêtement ou panneau 118 pour le traitement acoustique comprenant de l'intérieur vers l'extérieur, une couche réflectrice 120, au moins une structure alvéolaire 122 et au moins une structure acoustiquement résistive 124 formant la surface aérodynamique du conduit 112. Le conduit 112 peut comprendre plusieurs panneaux 118 pour le traitement acoustique reliés entre eux.

La lèvre 116 peut comprendre également un revêtement pour le traitement acoustique.

La nacelle comprend également un cadre avant 126 solidarisé à la lèvre 116, s'étendant entre le conduit 112 et la paroi périphérique 114.

Selon un mode de réalisation, pour assurer la liaison entre le panneau formant la lèvre 116 et le panneau formant la paroi périphérique 114, les bords desdits panneaux sont plaqués puis fixés par tous moyens appropriés contre un rebord 128 du cadre avant 126.

L'extrémité du cadre avant 126 orientée vers le centre de la nacelle comprend un rebord 132 orienté vers l'arrière, plaqué et fixé par des moyens de fixation à la face intérieure du bord du panneau formant la lèvre 116.

Les éléments constituant le conduit 112 sont assemblés de manière à former un premier sous ensemble à relier à un deuxième sous ensemble constitué de la lèvre 116 et du cadre avant 126.

Selon l'invention, la nacelle comprend au moins un élément de jonction 134 indépendant des deux sous ensembles permettant d'assembler le premier sous ensemble avec le deuxième sous ensemble.

Cet élément de jonction 134 peut se déformer de manière à permettre l'assemblage des deux sous ensembles si bien que les tolérances dimensionnelles peuvent être plus larges pour les zones des sous ensembles devant être assemblées. De plus, en raison de l'aptitude de l'élément de jonction à se déformer, l'assemblage peut être réalisé sans cale.

Cet élément de jonction 134 se présente sous la forme d'une bande circulaire dont une première partie en amont (selon le sens d'écoulement de l'air) est reliée au deuxième sous ensemble alors que la seconde partie aval est reliée au premier sous ensemble.

Selon une autre caractéristique, l'élément de jonction 134 est réalisé en un matériau ayant un coefficient d'allongement supérieur à 5%.

Selon un mode de réalisation, l'élément de jonction 134 est réalisé en titane. Grâce à cette caractéristique, l'élément de jonction assure la fonction d'absorption des chocs. Ainsi en cas de choc frontal au niveau de l'entrée d'air, l'élément de jonction 134 absorbe en se déformant une partie de l'énergie du choc et réduit les risques d'endommagement de l'entrée d'air ou du conduit. Avantageusement, l'élément de jonction 134 comprend des moyens de rupture entre la première partie reliée au deuxième sous ensemble et la seconde partie reliée au premier sous ensemble de manière à favoriser une rupture en cas de sollicitations trop importantes à son niveau, entre les deux sous-ensembles. Cette solution permet de préserver les deux sous-ensembles ce qui tend à réduire les coûts d'entretien et de dépannage. Selon un mode de réalisation, les moyens de rupture comprennent une ligne de rupture 136, par exemple un sillon, s'étendant sur au moins une partie de la périphérie du conduit et de préférence sur toute sa périphérie.

Selon le mode de réalisation illustré sur les figures 4 et 5, l'élément de jonction 134 comprend une première partie cylindrique 140 dont le diamètre est adapté pour que ladite première partie soit plaquée et fixée par des moyens de liaison 142 à la face intérieure du rebord 132 du cadre avant. En complément, l'élément de jonction 134 comprend une seconde partie cylindrique 144 dont le diamètre est adapté pour qu'elle soit plaquée et fixée par des moyens de liaison 146 à la face extérieure d'un prolongement 148 prévu à l'extrémité du conduit 112.

Les deux parties cylindriques 140 et 144 sont reliées par une portion conique au niveau de laquelle la ligne de rupture 136 est prévue.

Selon le mode de réalisation illustré sur la figure 6, l'élément de jonction 134 comprend une première partie cylindrique 150 dont le diamètre est adapté pour qu'elle soit plaquée et fixée par des moyens de liaison 152 à la face intérieure du rebord 132 du cadre avant. En complément, l'élément de jonction 134 comprend une seconde partie cylindrique 154 dont le diamètre est adapté pour qu'elle soit plaquée et fixée par des moyens de liaison 156 à la face intérieure d'un prolongement 158 prévu à l'extrémité du conduit 112. Selon ce mode de réalisation, les deux parties cylindriques 150 et 154 ont le même diamètre et sont reliées par une portion cylindrique intégrant la ligne de rupture 136. L'élément de jonction 134, appelé également pont, est relativement court selon la direction longitudinale de la nacelle.

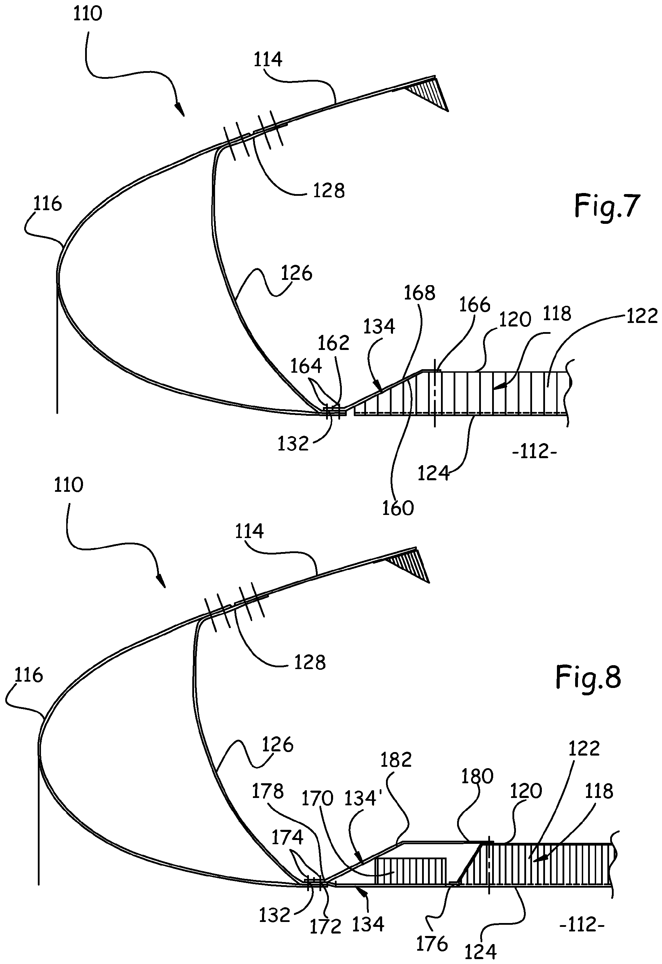

Selon un autre mode de réalisation illustré sur la figure 7, la couche réflectrice 120 comprend à proximité de son extrémité orientée vers la lèvre 116 un pan faiblement incliné 160 de manière à assurer un traitement acoustique sur toute la longueur du conduit 112. Dans ce cas, l'élément de jonction 134 comprend une première partie cylindrique 162 dont le diamètre est adapté pour qu'elle soit plaquée et fixée par des moyens de liaison 164 à la face intérieure du rebord 132 du cadre avant. En complément, l'élément de jonction 134 comprend une seconde partie cylindrique 166 plaquée et fixée à la face intérieure de la couche réflectrice au niveau de la portion cylindrique de la couche réflectrice 120.

Une portion conique 168 assure la liaison entre les deux parties cylindriques 162 et 166 et recouvre le plan incliné 160 de la couche réflectrice 120. Ainsi, cette portion conique 168 assure la fonction de barrière thermique et protège le panneau 118 pour le traitement acoustique en matériau composite des radiations thermiques émises par le cadre avant 126.

Selon un autre mode de réalisation illustré sur la figure 8, la nacelle comprend deux éléments de jonction 134 et 134'.

Le premier élément de jonction 134 peut comprendre un panneau pour le traitement acoustique 170. Il comprend en amont une première partie cylindrique 172 dont le diamètre est adapté pour qu'elle soit plaquée et fixée par des moyens de liaison 174 à la face intérieure du rebord 132 du cadre avant et en aval une seconde partie cylindrique 176 plaquée et fixée à la face extérieure du panneau acoustique 118.

Le second élément de jonction 134' comprend une première partie cylindrique 178 dont le diamètre est adapté pour qu'elle soit plaquée et fixée par des moyens de liaison à la face intérieure du premier élément de jonction 134 au droit du rebord 132 du cadre avant. En complément, le second élément 134' comprend une seconde partie cylindrique 180 plaquée et fixée à la face intérieure de la couche réflectrice 120 du panneau 118, une portion conique 182 assurant la liaison entre les parties cylindriques 178 et 180.

Selon ce dernier mode de réalisation, le panneau 118 pour le traitement acoustique en matériau composite est éloigné du cadre avant si bien que l'impact des radiations thermiques émises par ledit cadre est limité.

Le panneau 170 pour le traitement acoustique incorporé à l'élément de jonction 134 est en un matériau résistant à la chaleur. La présence de ce panneau 170 permet d'optimiser le traitement acoustique en augmentant la superficie des surfaces traitées.

Selon ce mode de réalisation, les deux éléments de jonction 134, 134' forment un Y dont le pied est formé par les parties cylindriques 172 et 178 reliées par les mêmes moyens au second sous ensemble alors que les branches formées respectivement par les secondes parties cylindriques 176 et 180 sont indépendantes avant le montage ce qui permet d'obtenir une meilleure adaptabilité des éléments de jonction 134, 134'aux sous ensembles.

## Revendications

1. Nacelle d'aéronef comprenant d'une part un premier sous ensemble constitué d'un conduit (112) canalisant un flux d'air en direction d'une motorisation avec un revêtement ou panneau (118) pour le traitement acoustique en matériau composite comprenant de l'intérieur vers l'extérieur, une couche réflectrice (120), au moins une structure alvéolaire (122) et au moins une structure acoustiquement résistive (124) formant la surface aérodynamique du conduit (112), et d'autre part un deuxième sous ensemble constitué d'une lèvre (116) et d'un cadre avant (126) avec un rebord (132) orienté vers l'arrière de la nacelle, au moins un élément de jonction (134) indépendant des deux sous-ensembles reliant les deux sous-ensembles, où l'élément de jonction (134) comprend d'une part une première partie cylindrique (140, 150, 162) dont le diamètre est adapté pour que ladite première partie soit plaquée et fixée par des moyens de liaison (142, 152, 164) à la face intérieure du rebord (132) du cadre avant orienté vers l'arrière de la nacelle, et d'autre part, une seconde partie cylindrique (144, 154, 166) reliée à l'extrémité du conduit (112), lesdites deux parties cylindriques étant reliées par une portion conique ou cylindrique et en ce que l'élément de jonction (134) est réalisé en un matériau ayant un coefficient d'allongement supérieur à 5% de manière à absorber grâce à sa capacité à se déformer une partie de l'énergie d'un choc.

2. Nacelle d'aéronef selon la revendication 1, **caractérisée en ce que** ledit élément de jonction (134) se présente sous la forme d'une bande circulaire dont une première partie en amont est reliée au deuxième sous ensemble alors que la seconde partie aval est reliée au premier sous ensemble, l'élément de jonction (134) comprenant des moyens de rupture (136) entre la première partie et la seconde partie.

3. Nacelle d'aéronef selon l'une quelconque des revendications précédentes, **caractérisée en ce que** la seconde partie cylindrique (144) a un diamètre adapté pour qu'elle soit plaquée et fixée par des moyens de liaison (146) contre la face extérieure d'un prolongement (148) prévu à l'extrémité du conduit (112), la première partie cylindrique et la deuxième partie cylindrique (140, 144) étant reliées par une portion conique.

4. Nacelle d'aéronef selon l'une quelconque des revendications 1 à 2, **caractérisée en ce que** la seconde partie cylindrique (154) a un diamètre adapté pour qu'elle soit plaquée et fixée par des moyens de liaison (156) contre la face intérieure d'un prolongement (158) prévu à l'extrémité du conduit (112).

5. Nacelle d'aéronef selon l'une quelconque des revendications 1 à 2, **caractérisée en ce que** la couche réflectrice (120) comprend à proximité de son extrémité orientée vers la lèvre (116) un pan incliné (160) et **en ce que** la seconde partie cylindrique (166) est plaquée et fixée contre la face intérieure de la portion cylindrique de la couche réflectrice (120), une portion conique (168) assurant la liaison entre la première partie cylindrique et la deuxième partie cylindriques et recouvrant ledit plan incliné (160) de la couche réflectrice (120).

6. Nacelle d'aéronef selon la revendication 1 ou 2, **caractérisée en ce qu'**elle comprend deux éléments de jonction (134, 134').

7. Nacelle d'aéronef selon la revendication 6, **caractérisée en ce que** le premier élément de jonction (134) comprend un panneau pour le traitement acoustique (170) avec en amont une première partie cylindrique (172) dont le diamètre est adapté pour qu'elle soit plaquée et fixée par des moyens de liaison (174) contre la face intérieure du rebord 132 du cadre avant et en aval une seconde partie cylindrique (176) plaquée et fixée contre la face extérieure du panneau (118) pour le traitement acoustique du conduit (112).

8. Nacelle d'aéronef selon la revendication 6 ou 7, **caractérisée en ce que** le second élément de jonction (134') comprend d'une part une première partie cylindrique (178) dont le diamètre est adapté pour qu'elle soit plaquée et fixée par des moyens de liaison contre la face intérieure du premier élément de jonction (134) au droit du rebord (132) du cadre avant, et d'autre part, une seconde partie cylindrique (180) plaquée et fixée contre la face intérieure de la couche réflectrice (120) du panneau (118) pour le traitement acoustique du conduit (112), une portion conique (182) assurant la liaison entre les parties cylindriques (178, 180).

## Patentansprüche

1. Gondel eines Luftfahrzeugs, die einerseits eine erste Untereinheit aufweist, die von einem Kanal (112) gebildet ist, der einen Luftstrom in Richtung einer Motorisierung mittels einer Verkleidung oder Platte (118) aus Verbundmaterial für die Schallbehandlung lenkt, die von innen nach außen eine reflektierende Schicht (120), wenigstens eine Wabenstruktur (122) und wenigstens eine schalldämpfende Schicht (124) aufweist, die die aerodynamische Oberfläche des Kanals (112) bildet, und die andererseits eine zweite Untereinheit aufweist, die von einem Wulst (116) und einem vorderen Rahmen (126) mit einem Rand (132) gebildet ist, der zum hinteren Teil der Gondel ausgerichtet ist, wobei wenigstens ein von den zwei Untereinheiten unabhängiges Verbindungselement (134) die beiden Untereinheiten verbindet und das Verbindungselement (134) einerseits einen ersten zylindrischen Abschnitt (140, 150, 162) aufweist, dessen Durchmesser dazu eingerichtet ist, dass der erste Abschnitt durch Verbindungsmittel (142, 152, 164) an der Innenseite des Randes (132)des zum hinteren Teil der Gondel ausgerichteten, vorderen Rahmens angebracht und befestigt ist, und andererseits einen zweiten zylindrischen Abschnitt (144, 154, 166) aufweist, der mit dem Ende des Kanals (112) verbunden ist, wobei die beiden zylindrischen Abschnitte durch einen konischen oder zylindrischen Bereich verbunden sind und wobei das Verbindungselement (134) aus einem Material hergestellt ist, das einen Dehnungskoeffizient oberhalb von 5% aufweist, um auf diese Weise einen Teil der Energie eines Schocks mittels seiner Fähigkeit zur Verformung aufzunehmen.

2. Gondel eines Luftfahrzeugs nach Anspruch 1, **dadurch gekennzeichnet, dass** das Verbindungselement (134) als kreisförmiges Band ausgestaltet ist, dessen stromaufwärts gelegener erster Abschnitt mit der zweiten Untereinheit verbunden ist, während der stromabwärts gelegene zweite Abschnitt mit der ersten Untereinheit verbunden ist, wobei das Verbindungselement (134) Bruchmittel (136) zwischen dem ersten Abschnitt und dem zweiten Abschnitt aufweist.

3. Gondel eines Luftfahrzeugs nach einem der vorhergehenden Ansprüche, **dadurch gekennzeichnet, dass** der zweite zylindrische Abschnitt (144) einen Durchmesser aufweist, der dazu eingerichtet ist, dass dieser durch Verbindungsmittel (146) an der Außenseite einer am Ende des Kanals (112) vorgesehenen Verlängerung (148) angebracht und befestigt ist, wobei der erste zylindrische Abschnitt und der zweite zylindrische Abschnitt (140, 144) durch einen kegelförmigen Bereich verbunden sind.

4. Gondel eines Luftfahrzeugs nach einem der Ansprüche 1 bis 2, **dadurch gekennzeichnet, dass** der zweite zylindrische Abschnitt (154) einen Durchmesser aufweist, der dazu eingerichtet ist, dass dieser durch Verbindungsmittel (156) an der Innenseite einer am Ende des Kanals (112) vorgesehenen Verlängerung (158) angebracht und befestigt ist.

5. Gondel eines Luftfahrzeugs nach einem der Ansprüche 1 bis 2, **dadurch gekennzeichnet, dass** die reflektierende Schicht (120) in der Nähe ihres zum Wulst (116) hinweisenden Endes eine geneigte Seitenfläche (160) aufweist, und dass der zweite zylindrische Abschnitt (166) an der Innenseite des zylindrischen Abschnitts der reflektierenden Schicht (120) angebracht und befestigt ist, wobei ein konischer Bereich (168) die Verbindung zwischen dem ersten zylindrischen Abschnitt und dem zweiten zylindrischen Abschnitt gewährleistet und die geneigte Seitenfläche (160) der reflektierenden Schicht (120) abdeckt.

6. Gondel eines Luftfahrzeugs nach Anspruch 1 oder 2, **dadurch gekennzeichnet, dass** diese zwei Verbindungselemente (134, 134') umfasst.

7. Gondel eines Luftfahrzeugs nach Anspruch 6, **dadurch gekennzeichnet, dass** das erste Verbindungselement (134) eine Platte für die Schallbehandlung (170) aufweist, die stromaufwärts über einen ersten zylindrischen Abschnitt (172) verfügt, dessen Durchmesser dazu eingerichtet ist, dass dieser durch Verbindungsmittel (174) an der Innenseite des Randes 132 des vorderen Rahmens angebracht und befestigt ist, und der stromabwärts über einen zweiten zylindrischen Abschnitt (176) verfügt, der an der Außenseite der Platte (118) für die Schallbehandlung des Kanals (112) angebracht und befestigt ist.

8. Gondel eines Luftfahrzeugs nach Anspruch 6 oder 7, **dadurch gekennzeichnet, dass** das zweite Verbindungselement (134') einerseits einen ersten zylindrischen Abschnitt (178) aufweist, dessen Durchmesser dazu eingerichtet ist, dass dieser durch Verbindungsmittel an der Innenseite des ersten Verbindungselements (134) gegenüber dem Rand (132) des vorderen Rahmens angebracht und befestigt ist, und andererseits einen zweiten zylindrischen Abschnitt (180) aufweist, der an der Innenseite der reflektierenden Schicht (120) der Platte (118) für die Schallbehandlung des Kanals (112) angebracht und befestigt ist, wobei ein gliederförmiger Bereich (182) die Verbindung zwischen den zylindrischen Abschnitten (178, 180) gewährleistet.

## Claims

1. Aircraft nacelle that comprises, on the one hand, a first subassembly that consists of a pipe (112) that channels an air flow in the direction of a power plant with a covering or panel (118) for acoustic treatment in composite material that comprises - from the inside to the outside - a reflective layer (120), at least one alveolar structure (122), and at least one acoustically resistive structure (124) that forms the aerodynamic surface of the pipe (112), and, on the other hand, a second subassembly that consists of a lip (116) and a front frame (126) with a flange (132) oriented towards the rear of the nacelle, at least one junction element (134) that is independent from the two subassemblies and that connects the two subassemblies, wherein the junction element (134) comprises, on the one hand, a first cylindrical part (140, 150, 162) whose diameter is adapted so that the first part is flattened and attached by connecting means (142, 152, 164) against the inside surface of the flange (132) of the front frame oriented towards the rear of the nacelle, and, on the other hand, a second cylindrical part (144, 154, 166) connected to the end of the pipe (112), said first and second cylindrical parts being connected by a circular or conical portion and the junction element (134) being made of a material that has an elongation coefficient that is greater than 5% in such a way as to absorb, owing to its capacity to deform, a portion of the energy of an impact.

2. Aircraft nacelle according to claim 1, wherein said junction element (134) comes in the form of a circular strip of which a first upstream part is connected to the second subassembly whereas the second downstream part is connected to the first subassembly, the junction element (134) comprising rupture means (136) between the first part and the second part.

3. Aircraft nacelle according to any of the preceding claims, wherein the second cylindrical part (144) has a diameter adapted so that it is flattened and attached by connecting means (146) against the outside surface of an extension (148) that is provided at the end of the pipe (112), the first and second cylindrical parts (140, 144) being connected by a conical portion.

4. Aircraft nacelle according to any of Claims 1 to 2, wherein the second cylindrical part (154) has a diameter adapted so that it is flattened and attached by connecting means (156) against the inside surface of an extension (158) that is provided at the end of the pipe (112).

5. Aircraft nacelle according to any of Claims 1 to 2, wherein close to its end that is oriented toward the lip (116), the reflective layer (120) comprises a slightly inclined face (160), and wherein the second cylindrical part (166) is flattened and attached against the inside surface of the cylindrical portion of the reflective layer (120), a conical portion (168) providing the connection between said first and second cylindrical parts and covering said inclined plane (160) of the reflective layer (120).

6. Aircraft nacelle according to Claim 1 or 2, wherein it comprises two junction elements (134, 134').

7. Aircraft nacelle according to Claim 6, wherein the first junction element (134) comprises an acoustic treatment panel (170) with, upstream, a first cylindrical part (172) whose diameter is adapted so that it is flattened and attached by connecting means (174) against the inside surface of the flange (132) of the front frame, and, downstream, a second cylindrical part (176) that is flattened and attached against the outside surface of the acoustic treatment panel (118) of the pipe (112).

8. Aircraft nacelle according to Claim 6 or 7, wherein the second junction element (134') comprises, on the one hand, a first cylindrical part (178) whose diameter is adapted so that it is flattened and attached by connecting means against the inside surface of the first junction element (134) facing the flange (132) of the front frame, and, on the other hand, a second cylindrical part (180) that is flattened and attached against the inside surface of the reflective layer (120) of the acoustic treatment panel (118) of the pipe (112), a conical portion (182) providing the connection between the cylindrical parts (178, 180).
